# FASCICULE DE BREVET EUROPEEN

(11) **EP 1 161 725 B1**
(45) Date de publication et mention de la délivrance du brevet: **12.02.2003**
(21) Numéro de dépôt: 00900650.3
(22) Date de dépôt: 24.01.2000
(51) Int. Cl.: G06F 11/28

(54) **PROCEDE DE SURVEILLANCE DU DEROULEMENT D'UN PROGRAMME**
VERFAHREN ZUR ÜBERWACHUNG DES PROGRAMMABLAUFS
METHOD FOR MONITORING A PROGRAMME FLOW

(30) Priorité: 09.03.1999 FR 9902924
(43) Date de publication de la demande: 12.12.2001
(73) Titulaire: Gemplus, 13881 Gémenos Cedex (FR)
(72) Inventeur: GIRARD, Pierre, F-13600 La Ciotat (FR); NACCACHE, David, F-75009 Paris (FR); ROUSSEAU, Ludovic, F-13400 Aubagne (FR)
(86) Numéro de dépôt international: FR0000150
(87) Numéro de publication internationale: WO00054155

(56) Documents cités:
- EP-A- 0 012 794
- US-A- 4 266 272

## Description

La présente invention concerne le domaine de la sécurité des programmes informatiques, et plus particulièrement un procédé et un dispositif de détection d'un déroulement inadmissible dans l'exécution d'un programme informatique, celui-ci pouvant être dans un langage de bas niveau ou de haut niveau.

Dans un programme en langage de bas niveau, les commandes sont formulées selon une structure très proche de celle des instructions effectivement exécutées par la partie processeur de l'ordinateur. Le programme nécessite seulement d'être compilé avant de pouvoir être exécuté. Les langages de bas niveau, connues sous l'appellation de code machine, sont utilisés notamment pour la programmation de microprocesseurs ou de microcontrôleurs. Les microcontrôleurs sont des processeurs qui ne peuvent exécuter qu'un nombre réduit d'instructions spécifiques. Ils sont utilisés notamment pour équiper des cartes à puce (cartes bancaires, téléphoniques, d'accès à des services, etc.) et pour piloter des appareils industriels ou domestiques.

Dans un programme en langage de haut niveau, les commandes ont une structure plus proche du langage naturel, mais en revanche plus éloignée de celle utilisée par le processeur. Les commandes écrites dans de tels langages doivent d'abord être interprétées, c'est-à-dire converties en commandes de code machine, avant de pouvoir être ensuite mises sous forme d'instructions en vu de leur exécution par le processeur.

Ainsi, tout programme informatique donne lieu à une suite d'instructions adaptées au processeur, microprocesseur ou microcontrôleur auquel il est destiné.

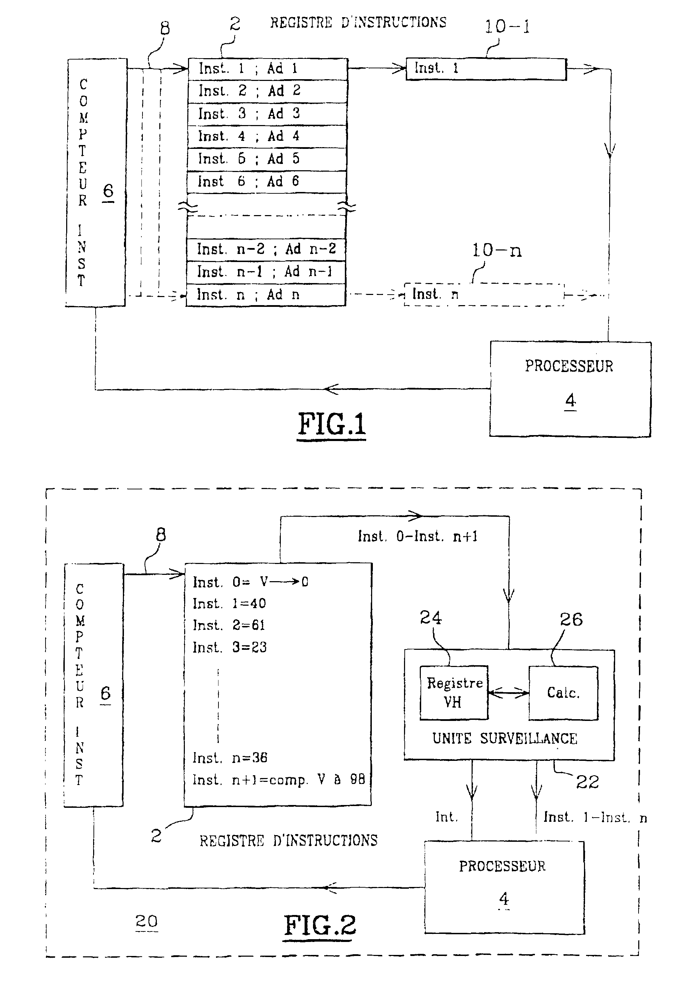

De manière classique, les instructions d'un programme sont exécutées par un processeur selon une séquence régie par un compteur d'instructions, comme il sera brièvement décrit par référence à la figure 1.

Les instructions compilées d'un programme sont chargées en blocs d'instructions successives Inst.1, Inst. 2, Inst. 3, ...., Inst. (où n est un entier) sous forme de codes ou de microcodes dans un registre d'instructions 2. Chaque instruction est identifiée par une adresse spécifique dans ce registre 2. Dans l'exemple, on désigne les adresses des instructions Inst. 1, Inst. 2, Inst. 3, ....., Inst. n respectivement Ad.1, Ad.2, Ad.3, ...., Ad.n. Les instructions sont lues du registre d'instructions 2 est chargées successivement dans le processeur 4 pour y être exécutés sous la commande d'un compteur d'instructions 6, lui-même contrôlé par le processeur 4. A cette fin, le compteur d'instructions 6 comporte un pointeur d'adresses 8 qui désigne l'adresse Ad.1, ....Ad.n du registre 2 à partir de laquelle doit être lue l'instruction à charger dans le processeur 4 durant l'exécution d'une séquence d'instructions. La position du pointeur 8 vis-à-vis des adresses du registre d'instructions 2 évolue donc au fur et à mesure de l'exécution des instructions.

Dans l'exemple représenté à la figure 1, les instructions Inst. 1, Inst. 2, Inst. 3, ...., Inst.n dans le registre 2 doivent être exécutées successivement de la première instruction Inst. 1 à la n^{ième} instruction Inst.n, c'est-à-dire de façon linéaire. Ainsi, le pointeur 8 du compteur d'instructions 6 désigne initialement l'adresse Ad 1 du registre 2, et les données 10-1 de l'instruction correspondante Inst.1 sont chargées dans le processeur 4. Lorsque le processeur 4 ordonne au compteur d'instructions 6 de fournir la prochaine instruction (dans ce cas Inst.2), celui-ci incrémente la position du pointeur 8 d'une unité d'évolution d'adresse afin de désigner l'adresse Ad.2. Ce processus se répète et se termine lorsque le pointeur 8 désigne l'adresse Ad.n afin de charger les données 10-n de la dernière instruction Inst.n (pointillées).

Une série d'instructions exécutées de façon linéaire ne comporte pas de ''sauts" qui échappent de la progression séquentielle du pointeur 8 vis-à-vis des adresses successives. Ceci est le cas, par exemple, avec un séquence d'instructions en microcodes comme :

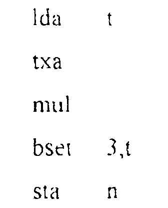

Autrement dit, cette séquence s'exécutera de façon linéaire, le compteur d'instructions 6 étant incrémenté d'une unité d'évolution d'adresse lors du passage d'une instruction à l'autre.

Cependant, il est courant que l'exécution d'un programme nécessite des sauts vers des instructions en dehors de la séquence linéaire des instructions telle qu'elle se présente dans le registre 2. De tels sauts peuvent résulter d'une instruction de chargement de données situées dans une adresse en dehors de la séquence, ou d'une instruction, dite de branchement, d'exécution conditionnelle de la commande suivante.

Une instruction qui provoque un saut nécessite, au niveau du compteur d'instructions 6, de déterminer l'adresse dans le registre 2 de la prochaine instruction suivant ce saut et de positionner le pointeur 8 à cette adresse afin que l'instruction ou la donnée qui s'y trouve soit chargée dans le processeur 4.

A titre d'exemple, la séquence : 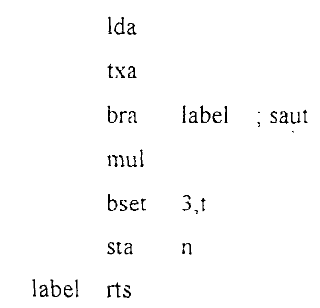 provoquera le chargement d'une nouvelle valeur dans le compteur d'instructions 6 à l'endroit du code correspondant au commentaire "saut".

Le fait pouvoir ainsi effectuer sous commande des sauts vers des adresses en dehors d'une suite séquentielle d'adresses peut malheureusement donner lieu à un déroulement inadmissible du programme. Un tel déroulement inadmissible du programme peut résulter d'un dysfonctionnement accidentel du dispositif programmé. Mais il peut aussi provenir d'une action malveillante visant à détourner le fonctionnement du dispositif programmé de sa fonction voulue. Par exemple, dans le cas d'une carte à puce, des modifications de programmation du microcontrôleur par la création ou la modification de sauts et/ou de branchements peuvent permettre de charger des données erronées (augmentation de crédit autorisé avec une carte bancaire ou téléphonique, fausse autorisation d'accès à certains services, etc.) ou de récupérer des données confidentielles stockées en mémoire (code d'accès, informations personnelles concernant le titulaire de la carte, etc.)

En effet, même lorsque les programmes sont enregistrés de manière figée sur une puce semiconductrice, il est possible avec les technique actuelles de sondage et de test de composants de créer des contacts de sondage sur la surface de la puce (ou même dans les couches basses de celle-ci) à l'aide de stations de travail à focalisation de faisceaux d'ions (aussi connues sous le terme anglo-saxon de "Focus Ion Beams", ou "FIBs").

Une fois créés, ces points de sondage permettent le dépôt de pointes de sondage à l'aide d'établis spécialisés (aussi connu sous le terme anglo-saxon de "probe stations") permettant la lecture en continue d'un bit (et le suivi de son évolution au cours du temps) ou une modification externe de sa valeur.

En particulier, le dépôt de contacts sur le registre du compteur d'instructions 6 permet de charger de façon externe la valeur du registre en cours d'exécution et de provoquer un branchement non-prévu par le concepteur du programme. Comme expliqué plus haut, un tel saut peut avoir, bien entendu, des conséquences néfastes sur la sécurité de l'applicatif et aboutir, par exemple, à la divulgation de données secrètes en effectuant des calculs incomplets.

Il existe également des manières plus rudimentaires, mais moins sûres, de provoquer de tels dysfonctionnements dans le déroulement du programme. Un exemple en est donné dans un article intitulé "Tamper-resistance, a cautionary note" par R.Anderson. Une autre technique consiste à exploiter des fautes de calcul provoquées délibérément afin d'extraire d'une carte à puce des données telles que les clés secrètes. Cette technique est décrite dans l'article intitulé "On the Importance of Checking Computations" de Boneh, DeMillo et Lipton; Bellcore Report, publié le 31 octobre 1996.

Bien entendu, le même phénomène peut également se produire lorsque le programme attaqué est interprété au lieu d'être compilé. Ainsi, une application en langage Java ou Basic peut être détourné de son usage légitime si l'attaquant arrive, par exemple, à provoquer un changement dans le pointeur de programme de l'interpréter indiquant l'instruction courante à interpréter.

Or, les systèmes informatiques actuels ne sont pas spécifiquement conçus afin d'interdire les branchements incontrôlés à l'intérieur d'un code. Bien au contraire, les langages d'assemblage ont été spécifiquement conçus afin de permettre au programmeur le maximum de liberté. A titre d'exemple, en langage C, il est possible de sauter à l'intérieur du code d'une fonction en utilisant l'exécution indexée par le pointeur.

Au vu de ces problèmes de déroulement de programme de manière inadmissible, qu'ils aient pour cause un dysfonctionnement intempestif ou une volonté de détourner le programme de son utilisation prévue, l'invention propose un procédé de surveillance du déroulement de l'exécution d'une suite d'instructions d'un programme informatique, consistant à analyser la séquence des instructions transmises vers le processeur destiné à exécuter le programme surveillé et à vérifier le résultat de ce cette analyse avec des données de référence enregistrées avec ledit programme.

Ainsi, la présente invention permet de vérifier que toutes les instructions comprises dans l'ensemble d'instructions considéré ont bien été transmises vers le processeur en vu de leur exécution. Il est à supposer que si tel est le cas, les instructions lues ainsi auront aussi été exécutées.

Les données de référence peuvent être par exemple une valeur préétablie de manière à correspondre au résultat de l'analyse réalisée lors du procédé de surveillance seulement si toutes les instructions de la séquence d'instructions ont été effectivement analysées lors du déroulement du programme.

De préférence, l'étape d'analyse comprend les sous-étapes d'extraction d'une donnée de chaque instruction transmise vers le processeur et de calcul prédéterminé sur chaque donnée ainsi extraite, et l'étape de vérification comporte la comparaison du résultat de l'analyse avec les données de référence.

Avantageusement, l'étape de vérification s'effectue par une comparaison câblée d'une valeur contenue dans un registre associé aux moyens de surveillance avec la valeur de référence, celle-ci pouvant être inscrite dans le programme de manière câblée, fixée (par exemple dans une mémoire figée type ROM) une fois pour toutes lors du masquage du code qui constitue le programme surveillé.

De préférence, la vérification est provoquée par une instruction placée à un emplacement prédéterminé dans le programme, cette instruction contenant les données de référence précitées.

Avantageusement, lorsque les instructions de l'ensemble d'instructions à surveiller se présentent sous la forme d'une valeur, hexadecimal ou décimal, on traite ces instructions en tant que simples valeur numériques lors de l'analyse précitée.

Le procédé global de surveillance de l'exécution d'une séquence d'instructions d'un programme informatique peut ainsi comprendre les étapes suivantes :
- lors de la préparation du programme
- incorporer, à au moins un emplacement prédéterminé d'une séquence d'instructions du programme, une valeur de référence établie selon une règle donnée appliquée sur des données identifiables dans chaque instruction à surveiller, et
- lors de l'exécution de la partie du programme à surveiller;
- obtenir lesdites données identifiables dans chaque instruction exécutée,
- appliquer ladite règle donnée sur lesdites données identifiables ainsi obtenues pour établir une valeur de vérification, et
- vérifier que cette valeur de vérification correspond effectivement à la valeur de référence enregistrée avec le programme.

Dans un mode de réalisation préféré de l'invention, on prévoit d'interrompre le déroulement du programme lorsque qu'il est détecté que la valeur de vérification ne correspond à la valeur de référence. Cette interruption peut être assortie d'une action d'invalidation pour usage futur du dispositif comprenant le programme informatique surveillé si la non correspondance entre la valeur de vérification et la valeur de référence est détectée un nombre prédéterminé de fois.

Avantageusement, l'ensemble d'instructions à surveiller ne comporte pas de sauts dans son déroulement prévu, de sorte que l'on s'attend à ce que toutes les instructions qu'il comporte soient exécutées dans tous les cas de figure envisagés.

Lorsque le programme ou la portion de programme à surveiller prévoit au moins un saut, il est possible d'appliquer le procédé de surveillance séparément sur des ensembles d'instructions qui ne comportent pas de sauts.

Dans le cas d'une instruction donnant lieu à au moins un saut dépendant des données manipulées, c'est-à-dire un branchement conditionnel, on peut mettre en oeuvre le procédé de surveillance séparément pour un ensemble d'instructions dépourvu de sauts et qui précède le saut, et pour au moins un ensemble d'instructions dépourvu de sauts qui succède à ce saut.

Dans ce cas, on peut envisager que pour un ensemble d'instructions précédant un saut, on intégre à cet ensemble l'instruction qui commande le saut (cette instruction étant normalement la dernière avant un branchement) aux fins de l'analyse visant à obtenir la valeur de vérification de cet ensemble d'instructions, et on vérifie ainsi le bon déroulement de cet ensemble d'instructions avant d'exécuter l'instruction de saut.

Avantageusement, on efface la valeur de vérification obtenue lors d'une précédente mise en oeuvre du procédé à chaque nouvelle mise en oeuvre du procédé. Cette disposition permet de gérer aisément le surveillance de différents ensembles d'instructions d'un programme, tels que ceux séparés par des sauts. Elle permet notamment de mettre en oeuvre le procédé avec les mêmes conditions initiales de calcul de valeur de vérification pour les différents ensembles séparés par des sauts.

A chaque nouvelle mise en oeuvre du procédé, la valeur de vérification peut être effacée par une simple remise à zéro. Cette valeur peut également être remplacée par une autre valeur initiale prédéterminée. Ces opérations de remise à zéro ou d'initialisation peuvent être activées par le logiciel protégé lui-même.

Avantageusement, la valeur de vérification est obtenue en tant que dernière valeur d'une suite de valeurs que l'on fait évoluer successivement avec l'analyse de chacune des instructions considérées de l'ensemble d'instructions. Cette approche permet de contenir un état interne du déroulement du procédé de surveillance et de suivre son évolution.

De préférence, le mode d'analyse permettant cette évolution de la valeur de vérification consiste à calculer, pour chaque instruction considérée succédant à une instruction précédente, le résultat d'une opération sur à la fois une valeur extraite de l'instruction considérée et le résultat obtenu par la même opération effectuée sur cette instruction précédente. Pour le calcul lié à une première instruction à vérifier, on peut appliquer une opération sur à la fois la donnée extraite de cette première instruction et une valeur prédéterminée (qui peut correspondre alors à la valeur de réinitialisation ou de remise à zéro précitée), celle-ci faisant office de valeur "graine" en l'absence résultat d'opération précédante.

De cette manière, il est possible d'obtenir la valeur de vérification correcte en utilisant un algorithme récursif applicable de la même manière pour les données extraites de chacune des instructions considérées. Qui plus est, l'opération de calcul peut être choisie aisément de manière à ce qu'une valeur de vérification correcte soit obtenue seulement si d'une part les données de toutes les instructions ont été considérées lors du calcul, et d'autre part elles ont été considérées dans l'ordre prévu.

L'opération de calcul peut consister à appliquer une fonction de hachage, selon une technique connue en elle-même dans le domaine du chiffrement de données, tel que la fonction de hachage SHA-1 établie par norme fédérale de hachage. On peut réaliser dans ce cas l'évolution interne précité du déroulement du procédé de surveillance en hachant cryptographiquement l'ensemble des codes d'opération (considérés en tant que valeurs numériques) et des adresses exécutés depuis la dernière initialisation effectuée.

En variante, il possible de faire évoluer la valeur de vérification en effectuant un calcul de redondance non nécessairement cryptographique sur l'ensemble des codes d'opération et des adresses exécutées depuis la dernière initialisation effectuée. A titre d'exemple, on peut utiliser des algorithmes du type CRC (cyclic redundancy check en anglais).

Il est possible avec l'invention d'obtenir le valeur de comparaison par calcul de valeurs intermédiaires au fur et à mesure que les données comprises dans les instructions respectives sont obtenues au cour de l'exécution de celles-ci. Avec cette approche, il n'est pas nécessaire de sauvegarder chaque valeur extraite des instructions de l'ensemble d'instructions considéré. En effet, à l'issu d'un calcul de valeur intermédiaire, seule compte cette valeur intermédiaire pour calculer la prochaine valeur intermédiaire (ou la valeur ultime qui correspond à la valeur de vérification), et la donnée qui a permis de l'engendrer n'est plus à prendre en considération. Cette disposition permet d'économiser de l'espace mémoire au niveau des moyens de mise en oeuvre de l'invention.

En variante, il est possible de sauvegarder chaque donnée comprise dans les instructions de l'ensemble d'instructions considéré au fur et à mesure qu'elles sont exécutées et de n'effectuer le calcul de la valeur de vérification seulement au moment nécessaire, par exemple lors de l'étape de vérification.

L'invention concerne aussi un dispositif de surveillance du déroulement de l'exécution d'une suite d'instructions d'un programme informatique, caractérisé en ce qu'il comporte des moyens pour analyser la séquence des instructions transmises vers le processeur destiné à exécuter le programme surveillé et des moyens pour vérifier le résultat de ce cette analyse avec des données de référence enregistrées avec ledit programme.

Le dispositif de surveillance conforme à la présente invention comporte avantageusement un registre permettant d'enregistrer des résultats intermédiaires dans le calcul de la valeur de vérification. Ce registre peut être adapté pour ne retenir seulement le dernier résultat intermédiaire en cours.

Il peut être prévu pour permettre l'enregistrement d'une valeur prédéterminée ou une remise à zéro sous la commande du programme en cours d'exécution. De cette manière, le programme peut commander une condition initiale au niveau du contenu du registre à chaque nouvelle mise en oeuvre du procédé de surveillance, celle-ci intervenant par exemple après un saut dans le programme.

Le dispositif de surveillance peut être intégré dans un dispositif d'exécution de programme à surveiller ou dans un dispositif programmé qui contient le programme à surveiller.

L'invention concerne également un dispositif d'exécution de programme, par exemple un ordinateur, un appareil à microprocesseur ou à microcontrôleur tel qu'un lecteur de carte à puce ou de programme enregistré sur une carte au format PCMClA, destiné à exécuter une suite d'instructions d'un programme informatique, caractérisé en ce qu'il comporte des moyens pour analyser la séquence des instructions transmises pour exécution et des moyens pour vérifier que le résultat de cette analyse correspond avec des données de référence enregistrées avec le programme.

L'invention concerne aussi un dispositif programmé destiné à fonctionner avec le dispositif d'exécution de programme précité et comportant une suite d'instructions, caractérisé en ce qu'il comporte en outre des données de référence préétablies en fonction de données contenues dans lesdites instructions et destinées à permettre une vérification de la séquence des instructions analysées par le dispositif d'exécution de programme précité.

Le dispositif programmé, par exemple une carte à puce ou un organe de contrôle de mécanisme, tel qu'un système de freinage ABS, peut intégrer le programme à surveiller dans une mémoire figée du type ROM.

Les données de référence sont avantageusement enregistrées sous la forme de valeur(s) pré-câblée(s) fixée(s) dans la mémoire une fois pour toutes lors du masquage du code.

La présente invention concerne aussi un dispositif de programmation d'un dispositif d'exécution d'un programme destiné à fonctionner en association avec le dispositif programmé précité, caractérisé en ce qu'il comprend des moyens pour inscrire, à au moins un emplacement prédéterminé d'une séquence d'instructions du programme, une valeur de référence calculée selon un mode préétabli à partir de données comprises dans chaque instruction d'un ensemble d'instructions dont on souhaite surveiller l'exécution.

Enfin, l'invention concerne aussi une machine virtuelle ou interpréteur interprétant un code critique, caractérisé en ce qu'il met en oeuvre le procédé de surveillance précité pour l'exécution de ce code critique.

Les dispositifs précités de surveillance, d'exécution de programme, ou de programmation ou encore les dispositifs équipés de tels programmes peuvent être équipés de tous les moyens nécessaires pour réaliser les différents aspects optionnels possibles du procédé de surveillance précité.

A titre d'exemple, on peut envisager dans une application liée à une carte à puce, d'ajouter à un microprocesseur qui exécute un programme un composant matériel additionnel servant d'unité de surveillance. Le rôle de cette unité est de surveiller que des sauts non-prévus par le concepteur du logiciel ne puissent avoir lieu en cours d'exécution. Dans cet exemple, l'unité de surveillance pourra être composée de registres dont le contenu constitue à tout moment l'état interne de l'unité de surveillance. Une entrée spécifique de l'unité de surveillance permet sa remise à zéro (RAZ), typiquement en effaçant le contenu de l'unité de surveillance. Cette fonction peut être activée à tout moment par le logiciel exécuté et peut, par exemple, se réaliser par l'ajout d'un nouveau code opération en assembleur (par exemple "clr us") ou en manipulant un bit donnée dans la mémoire du composant protégé (par exemple : setb 3, service).

Dans cet exemple d'application, l'unité de surveillance compare son état interne avec une chaîne donnée fournie par le logiciel protégé. Cela peut par exemple être réalisé en recopiant à l'intérieur de l'unité de surveillance (à l'aide d'une boucle "lda-sta") la valeur à laquelle le logiciel souhaite comparer l'état interne. Une fois la recopie de la valeur terminée, l'unité de surveillance la compare à son état interne et adopte le comportement suivant: si l'état de l'unité de surveillance est égal à la valeur présentée par le logiciel protégé, reprendre l'exécution normalement, sinon l'exécution du programme est arrêtée (forçant l'utilisateur à faire une remise à zéro de la carte), éventuellement en ratifiant au préalable un compteur de fausses exécutions dans une mémoire non volatile du type EEPROM ayant pour effet le blocage définitif de la carte si sa valeur dépasse une limite raisonnable (par exemple 4).

L'unité de surveillance peut garder de façon permanente un haché cryptographique des codes instructions et des adresses exécutés depuis sa dernière remise à zéro.

Le mécanisme de surveillance peut être adapté à l'interprétation de code dans une machine virtuelle (du "byte code" Java, par exemple). Le compilateur peut calculer la valeur du haché d'une portion de byte code, l'intégrer dans un attribut d'une structure connue sous le terme anglo-saxon de "class file" produit et ajouter au byte code généré des codes connus sous le terme anglo-saxon de "opcodes" supplémentaires correspondant à la remise à zéro de l'unité de surveillance et à l'appel de la fonction de vérification. La machine virtuelle tiendra lieu d'unité de surveillance et lorsqu'elle rencontrera l'opcode de vérification, vérifiera la valeur du haché courant par rapport à la valeur du haché théorique contenu dans le class file.

L'invention sera mieux comprise et les avantages et caractéristiques ressortiront plus clairement à la lecture de la description suivante d'un mode de réalisation préféré, donnée purement à titre d'exemple, par référence aux dessins annexés, dans lesquels :
- la figure 1, déjà présentée, est un schéma bloc simplifié visant à expliquer le rôle d'un compteur d'instructions dans le déroulement de l'exécution d'un programme,
- la figure 2 est un schéma bloc simplifié d'un dispositif d'exécution de programme visant à expliquer le principe de fonctionnement d'une unité de surveillance conformément à un premier mode de réalisation de l'invention,
- la figure 3 est un organigramme du procédé de surveillance selon l'invention,
- la figure 4 est un organigramme d'une variante du procédé de surveillance selon l'invention,
- la figure 5 est un schéma bloc simplifié d'un dispositif d'exécution de programme visant à expliquer le principe de fonctionnement d'une unité de surveillance conformément à un deuxième mode de réalisation de l'invention,
- la figure 6 est un organigramme du procédé de surveillance selon l'invention, adapté au deuxième mode de réalisation, et
- la figure 7 représente de manière schématisée des ensembles d'instructions d'un programme avec branchement contenant en outre des instructions spécifiques au procédé de surveillance.

Le principe de l'invention sera expliqué par référence au schéma bloc de la figure 2, dans lequel les blocs ayant un rôle analogue à ceux de la figure 1 portent les mêmes références et ne seront pas décrits à nouveau par souci de concision.

La figure 2 représente les éléments de base d'un dispositif d'exécution de programme 20 au sens large. Il peut s'agir d'un ordinateur destiné à exécuter un programme dans un langage de haute niveau, d'un microprocesseur ou d'un microcontrôleur, ces derniers fonctionnant à partir de programmes en langage de bas niveau. A titre d'exemple, le dispositif d'exécution 20 peut être un lecteur de carte à puce destinée à gérer des transactions bancaires, téléphoniques, ou d'autres services. Le programme à vérifier est alors contenu matériellement dans la carte à puce.

Afin de concrétiser la description qui suit, on supposera que le dispositif d'exécution de programme 20 est basé sur un processeur 4 de type microcontrôleur.

Le processeur 4 exécute une portion de programme stockée dans un registre d'instructions 2 sous forme de microcodes. La partie opérationnelle de cette portion de programme comprend une séquence de n instructions (où n est un entier supérieur à 1) désignées respectivement Inst 1, Inst 2, Inst.3, ..., Inst.n. Les microcodes qui constituent les instructions se présentent sous la forme de valeurs numériques, qui peuvent être décimales ou hexadécimales.

Une telle valeur peut ainsi être considérée de deux façons distinctes, chacune porteuse d'une donnée premièrement en tant qu'instruction qu'elle représente pour le processeur (dans lequel cas elle sera désignée "valeur code"), et deuxièmement en tant que simple valeur numérique susceptible de traitement arithmétique (dans lequel cas elle sera désignée "valeur numérique" Vinst). Par exemple, la première instruction Inst.1 est égale à 40. Ce chiffre est un code qui correspond à une instruction reconnue par le processeur, mais il possède la même structure binaire que la valeur numérique 40.

Aucune des instructions Inst.1, Inst.2, Inst.3, .. , Inst n ordonne un saut vers une autre instruction en dehors de la séquence linéaire d'exécution des instructions. Ainsi, le déroulement normal et prévu de cette portion de programme requiert obligatoirement l'exécution de chacune des instructions en succession, en commençant par l'instruction Inst. 1 et en terminant par l'instruction Inst.n. De la sorte, le compteur d'instructions 6 (déjà décrit) positionnera son pointeur 8 successivement à l'adresse de chacune des instructions Inst 1 à Inst.n dans le registre d'instruction 2 au fur et à mesure qu'elles doivent être chargées dans le processeur 4.

Conformément à la présente invention, le dispositif d'exécution de programme 20 comporte une unité de surveillance 22 qui permet de vérifier que chacune des instructions Inst.1 à Inst n a bien été chargée vers le processeur 4 en vu de leur exécution. Elle est fonctionnellement reliée entre le registre d'instructions 2 et le processeur 4. Ainsi, toutes les instructions lues du registre d'instructions 2 transitent à travers l'unité de surveillance 22 avant de parvenir au processeur 4.

Dans cet exemple, l'unité de surveillance 22 est décrite comme étant intégrée au dispositif d'exécution de programme 20. Toutefois, l'unité de surveillance 22 peut tout aussi bien être intégrée avec le dispositif qui comporte le programme à surveiller, en étant par exemple incorporée dans une carte à puce dont le programme qu'elle contient en mémoire est à surveiller, sans que cela change les principes qui seront décrits ci-après.

Comme il sera expliqué de manière plus détaillée ci-après, l'unité de surveillance 22 comporte un registre 24 destiné à stocker provisoirement une donnée comprise dans une instruction Inst.1, Inst.2, Inst.3, ..., Inst.n et un calculateur 26 destiné à exécuter une opération sur cette donnée.

La mise en oeuvre de l'unité de surveillance demande l'adjonction de deux nouvelles instructions aux n instructions Inst 1, Inst.2, Inst 3, ..., Inst.n du programme: une première instruction de surveillance Inst.0 placée avant la première instruction Inst. 1 du programme et une seconde instruction de surveillance Inst.n+1 placée à la suite de la dernière instruction Inst.n du programme.

Lors du déroulement de l'exécution des n instructions du programme, le compteur d'instructions 6 est initialement commandé pour positionner son pointeur 8 à l'adresse de la première instruction de surveillance Inst 0. Cette instruction commande à l'unité de surveillance d'initialiser une valeur de hachage VH contenue dans son registre 24. Dans l'exemple, l'instruction Inst.0 commande simplement au registre 24 mettre la valeur VH =0. Elle n'est pas transmise vers le processeur 4.

Ensuite, le dispositif d'exécution de programme 20 passe en phase d'exécution des instructions Inst 1, Inst.2, Inst 3, ..., Inst n du programme proprement dit. Chaque instruction lue à partir du registre d'instructions 2 est transmise en premier lieu à l'unité de surveillance 22 où elle est considérée comme valeur numérique.

La valeur numérique de chaque instruction est soumise par le calculateur 26 à un algorithme de hachage, tel le hachage SHA-1 précisé par la norme fédérale de hachage. Le résultat VHi de l'opération de hachage liée à une instruction Inst.i (où i est un entier de 1 à n) est inscrite dans le registre 24.

Cette valeur VHi sert de base pour l'opération de hachage avec l'instruction suivante Inst.i+1. Le résultat de hachage VHi+1 ainsi obtenu pour l'instruction Inst.i+1 est alors inscrit en lieu et place du résultat de hachage VHi obtenu précédemment.

Cette procédure est poursuivie pour chacune des instructions Inst.1, Inst.2, Inst.3, ...., Inst.n qui transitent par l'unité de surveillance 22.

Lorsque la dernière instruction Inst n est exécutée, la seconde instruction de surveillance Inst.n+1 est chargée dans l'unité de surveillance 22. Cette instruction comporte deux composantes : une valeur de reférence Vréf et une commande, destinée au calculateur 26, de comparaison de cette valeur de référence Vréf avec la valeur du dernier résultat de hachage inscrite dans le registre 24. Cette dernière valeur correspond donc au résultat du hachage VHn obtenu à partir de la valeur numérique de l'instruction Inst n (égale à 36 dans la figure) et du résultat de hachage VHn-1 obtenue pour l'instruction Inst n-1 précédente.

Ainsi, en réponse à la seconde instruction de surveillance Inst.n+1, le calculateur 26 compare la valeur VHn dans le registre 22 avec la valeur de référence Vréf spécifiée dans cette instruction de surveillance.

La valeur de référence Vréf est determinée lors de la préparation du programme enregistré afin de correspondre à la valeur attendue VHn pour le résultat des hachages successifs des valeurs des instructions Inst 1, Inst.2, Inst.3, ..., Inst n. Cette valeur Vréf peut être calculée d'avance en utilisant la même procédure de hachage successif des instructions Inst.1, Inst.2, Inst 3, ..., Inst n qu'utilisée par l'unité de surveillance 22.

De préférence, la valeur Vréf est câblée dans une mémoire figée afin de ne pas pouvoir être modifiée par un acte de malveillance.

Si l'unité de surveillance 22 constate, en exécutant l'instruction du surveillance Inst n+1, qu'il y a identité entre les valeurs Vréf et VHn précitées, il est conclu que toutes les instructions Inst. 1, Inst.2, Inst.3, ...., Inst.n. ont bien été transmises vers le processeur 4 en vu de leur exécution.

Si, au contraire, l'unité de surveillance 22 constate qu'il n'y a pas identité entre les valeurs Vréf et VHn, il est conclu que ou bien toutes les instructions Inst 1, Inst.2, Inst.3, ..., Inst.n. n'ont pas été reçues et transmises par l'unité de surveillance, ou bien elles ne l'ont pas été dans l'ordre séquentiel prévu. Dans ce cas, on peut prévoir une action visant alerter l'utilisateur ou le titulaire du programme, ou d'empêcher le programme de se poursuivre. Dans l'exemple, une telle action est transmise de l'unité de surveillance 22 vers le processeur 4 sous forme d'une commande d'interruption du programme Int..

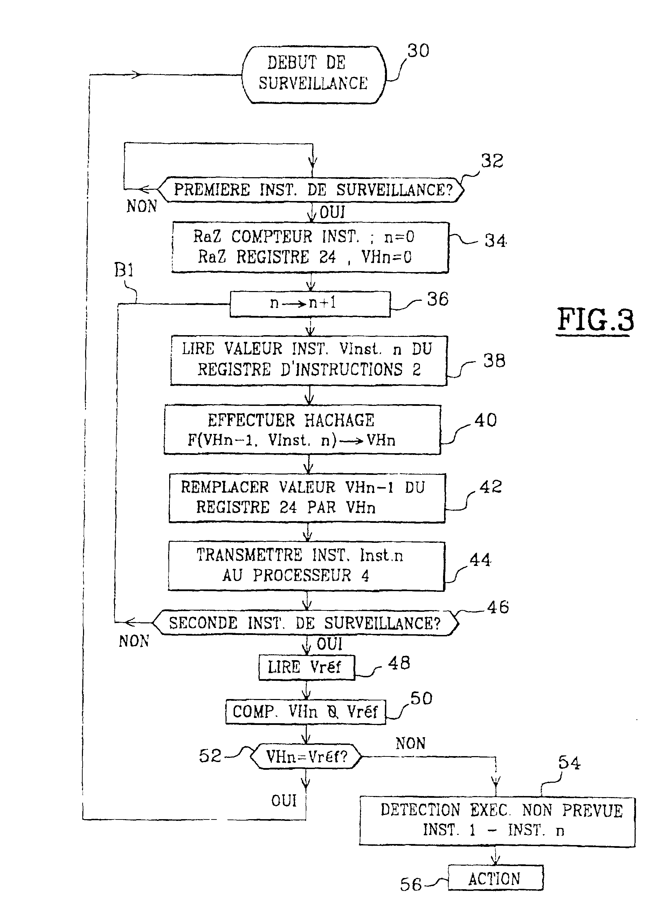

Le procédé de surveillance tel que réalisé par les moyens de la figure 2 sera maintenant décrit par référence à l'organigramme représenté à la figure 3. On suppose que le programme ou la partie de programme à surveiller a éte préparé correctement pour le procédé de surveillance par l'incorporation des première et seconde instructions de surveillance respectivement au début et à la fin.

Au stade initial, l'unité de surveillance 22 se positionne sur une routine de début de surveillance 30, dont la première étape 32 est l'attente de la première instruction de surveillance (Inst.0).

Lorsque la première instruction de surveillance Inst.0 est reçue, l'unité de surveillance 22 effectue une étape 34 d'initialisation (par remise à zéro) d'un compteur d'instructions et du registre 24. La remise à zéro du registre 24 est une manière de placer une valeur "graine" dans ce registre pour démarrer une séquence d'opérations de hachage, comme il sera expliqué plus loin. Ces opérations peuvent être commandées directement par la première instruction de surveillance ou être simplement déclenchée par celle-ci à partir d'une routine associée à l'unité de surveillance 22.

Dans ce premier cas, la remise à zéro peut se réaliser par l'ajout d'un nouveau code opération en assembleur (par exemple "clr us"), ou en manipulant un bit donné dans la mémoire du dispositif d'exécution de programme 20. Une telle commande peut être "setb 3, service".

Après l'étape d'initialisation, l'unité de surveillance 22 incrémente le compteur d'instructions d'une unité (positionnant alors ce compteur à n=1) (étape 36).

Ensuite, la première instruction Inst 1 du programme ou de la partie de programme sous surveillance est lue du registre d'instructions 2 (étape 38). Comme expliqué plus haut, cette instruction est considérée par l'unité de surveillance 22 purement en tant que valeur numérique permettant des opérations arithmétiques. Dans l'exemple de la figure 2, cette valeur est 40.

La valeur numérique de cette première instruction Inst.1 est alors soumise à une opération de hachage avec la valeur contenue dans le registre 24 (étape 40). Dans le cas de la première instruction, cette dernière valeur est la valeur d'initialisation, c'est-à-dire 0.

L'opération de hachage, bien connue en elle-même, consiste ici à faire agir sur la valeur de l'instruction n considérée un opérateur mathématique f(VHn-1, Vinst.n), où VHn-1 est le résultat d'une opération de hachage précédente (ou la valeur d'initialisation dans le cas de la première instruction) enregistré dans le registre 24 et Vinst.n est la valeur numérique de l'instruction n considérée.

Le résultat VHn de cette opération de hachage est ensuite enregistré dans le registre 24 à la place du résultat VHn-1 précédent (étape 42). On note que cette procédure de réactualisation du contenu du registre à chaque opération de hachage permet de garder de façon permanente un haché cryptographique des codes instructions et des adresses exécutés depuis la dernière initialisation.

A la fin de cette opération de hachage, l'instruction est transmise vers le processeur 4 en vue de son exécution (étape 44).

Ensuite, l'unité de surveillance 22 détermine si le programme ou la partie de programme à surveiller contient une autre instruction à exécuter (étape 46).

Ceci étant le cas, la procédure effectue un rebouclage B1 vers l'étape 36 d'incrémentation de n à n+1. La valeur de la prochaine instruction (Inst.2) sera alors lue du registre d'instructions 2 et soumise à l'opération de hachage de la même manière que pour l'instruction Inst. 1. Seulement, le hachage s'effectue cette fois avec d'une part la valeur numérique de l'instruction Inst.2 et le résultat obtenu lors de l'opération de hachage précédente, c'est-à-dire la valeur VH1 (n étant ici égal à 2) qui est alors dans le registre 24.

Les étapes 42 à 46 du procédé s'effectuent de la même manière que pour la première instruction. De la sorte, l'ensemble des étapes 36 à 46 se poursuit en boucle pour chaque instruction Inst. 1, Inst. 2. Inst. 3, .. Inst. n. lue du registre d'instructions 2, avec le hachage s'opérant, pour une instruction Inst.i (où i est un entier de 1 à n) avec la valeur VHni-1 dans le registre 24 et la valeur Vinst.i.

Une fois que toutes les instructions Inst.1, Inst.2, Inst.3, ...., Inst.n. ont été ainsi traitées par l'unité de surveillance 22, celle-ci reçoit la seconde instruction de surveillance Inst. n+1, celle-ci suivant la dernière instruction Inst.n du programme ou de la partie de programme surveillé.

Cette seconde instruction de surveillance commande l'unité de surveillance 22 d'extraire la valeur de référence Vréf du programme (étape 48) et de comparer le contenu du registre 24 à cette valeur Vréf (étape 50). Cette commande peut être réalisée à l'aide d'une boucle "Ida-sta".

On rappelle que, par exécution de boucles successives des étapes 36 à 46, la valeur contenue dans le registre 24 à ce stade est le résultat VHn du hachage réalisé avec le résultat VHn-1 du hachage précédent et de la valeur numérique de l'instruction n (égal à 36 dans l'exemple de la figure 2).

La valeur de référence Vréf a été préalablement déterminée lors de la préparation du programme en connaissance des opérations de hachage, afin d'être égale à ce que l'unité de surveillance 22 devrait rendre en tant que valeur VHn si toutes les instructions Inst.1, Inst.2, Inst.3,..., Inst.n ont bien été transférées vers le processeur 4.

Ainsi, le résultat de la comparaison permet de contrôler le bon déroulement des instructions Inst.1. Inst.2, Inst.3, ..., Inst.n si VHn = Vréf (étape 52), on suppose que toutes les instructions on été effectivement transférées vers le processeur 4. L'opération de surveillance est alors terminée en ce qui concerne le programme ou la portion de programme contenant les instructions Inst.1, Inst. 2, Inst.3, ...., Inst.n.

La procédure de surveillance retourne alors à la phase de début 30 en attente d'une nouvelle première instruction de surveillance.

Si, au contraire, l'étape de comparaison 50 fait apparaître qu'il n'y a pas identité entre les valeurs comparées (VHn-Vréf.), on suppose que toutes les instructions Inst.1, Inst.2, Inst.3, ... Inst.n n'ont pas été transférées vers le processeur 4, ou n'ont pas été transférées dans le bon ordre (étape 54). En effet, le résultat d'une succession d'opérations de hachage dépend de l'ordre dans lequel elles ont été effectuées.

Dans ce cas, l'unité de surveillance 22 commande une action (étape 56), telle que l'interruption du programme et/ou l'enregistrement du fait que le programme ne s'est pas déroulé correctement.

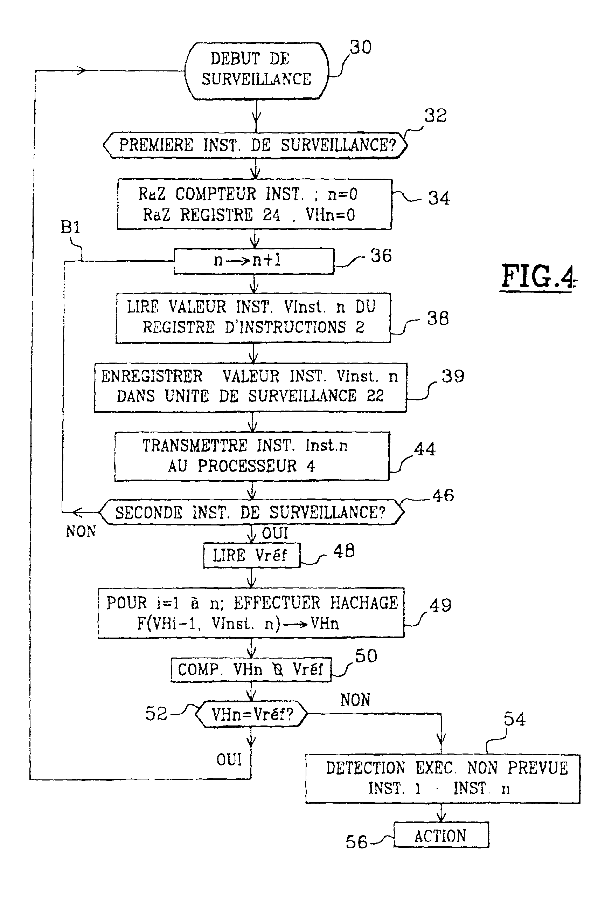

Une variante du procédé de surveillance précité sera maintenant décrite par référence à l'organigramme de la figure 4. Selon cette variante, au lieu d'effectuer une opération de hachage lors de la réception de chaque nouvelle instruction par l'unité de surveillance 22, on réalise l'ensemble des opérations de hachage seulement après réception de la seconde instruction de surveillance. Dans l'organigramme de la figure 4, les étapes qui sont identiques à celles précédemment décrites par référence à la figure 3 portent les mêmes références et ne seront pas décrites à nouveau par souci de concision.

Le procédé de surveillance se déroule comme pour le cas précédent en ce qui concerne les étapes 30 à 38 (figures 3 et 4). Après l'étape 38 de lecture de la valeur de l'instruction Vinst.n du registre d'instructions 2, l'unité de surveillance 22 procède à l'enregistrement de cette valeur (étape 39). Cet enregistrement peut s'effectuer dans un registre interne du calculateur 26, dans une section dédiée du registre 24, dans une mémoire spécifique (non représentée) de l'unité de surveillance 22, ou encore dans une mémoire extérieure à l'unité de surveillance 22, dès lors qu'elle est accessible par celle-ci.

Ensuite, l'unité de surveillance 22 procède aux étapes 44 et 46 précédemment décrites. On remarque que l'étape 39 d'enregistrement des valeurs Vinst.n est dans la boucle B1 reliant l'étape 46 à l'étape 36 d'incrémentation de n par une unité, de sorte que chacune des valeurs Vinst.n est ainsi enregistrée jusqu'à la détection de la seconde instruction de surveillance à l'étape 46.

Lorsque cette seconde instruction apparaît, l'unité de surveillance 22 lit la valeur de référence Vréf (étape 48) et effectue à l'étape 49 le hachage selon le même algorithme qu'aux étapes précédemment décrites 40 et 42 de la figure 3, en se basant sur l'ensemble des valeurs Vinst, préalablement enregistrées. La valeur finale de hachage VHn est alors la même que dans le cas du procédé de la figure 3. On notera qu'il est possible d'intervertir l'ordre des étapes 48 et 49.

Les étapes de comparaison 50 et celles qui suivent sont identiques à celles de la figure 3.

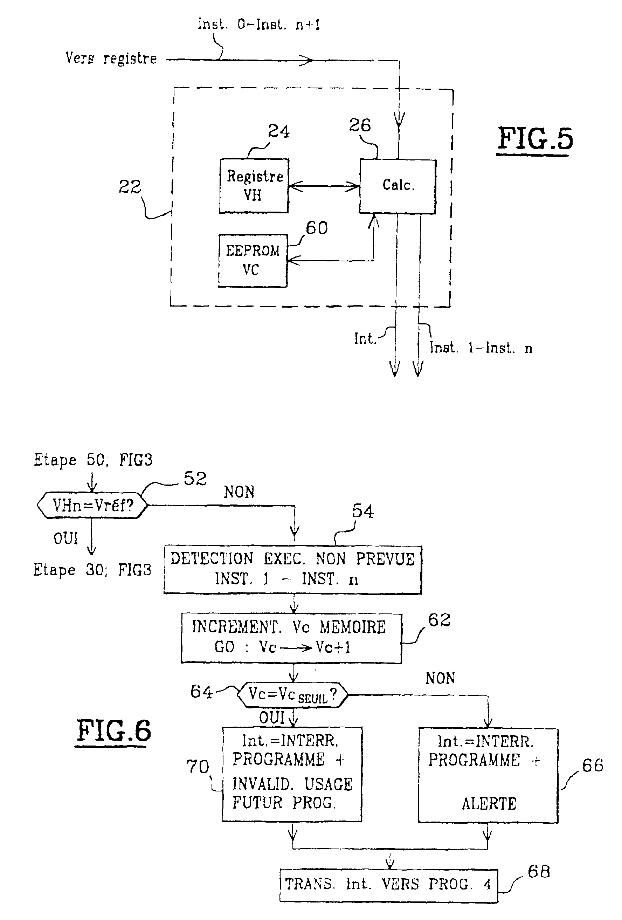

La figure 5 est un schéma bloc simplifié de l'unité de surveillance 22 conformément à un deuxième mode de réalisation de l'invention. Son intégration dans le dispositif d'exécution de programme 20 est la même que pour le premier mode de réalisation décrit par réference aux figures 2 et 3 en ce qui concerne son fonctionnement avec le compteur d'instructions 6, le registre d'instructions 2 et le processeur 4, et ne sera pas répété par souci de concision.

L'unité de surveillance 22 selon le deuxième mode de réalisation se distingue de celle du premier mode de réalisation essentiellement par le fait qu'il comporte en outre une mémoire 60 qui enregistre le nombre de fois que l'exécution d'une série d'instructions Inst.1-Inst.n ne s'est pas déroulée correctement selon les critères expliqués par référence à la figure 3 ou 4.

Dans l'exemple, la mémoire 60 est matérialisée sous forme de mémoire figée (non volatile) à contenu effaçable électriquement (connu communément par l'appellation anglo-saxonne EEPROM).

La mémoire 60 est reliée fonctionnellement au calculateur 26 de manière à ce qu'elle enregistre une valeur de comptage VC incrémentée d'une unité à chaque constat d'une exécution incorrecte dans la série d'instructions surveillée. Cette valeur de comptage VC permet ainsi de détecter le nombre de déroulements incorrects de la série d'instructions et d'agir en conséquence, par exemple en invalidant toute future utilisation du dispositif contenant le programme (par exemple une carte à puce) si ce nombre franchit une valeur seuil.

L'organigramme de la figure 6 donne un exemple d'utilisation de la valeur de comptage VC pour contrôler le dispositif de l'exécution de programme. Cet exemple comporte l'ensemble des étapes 30 à 54 de l'organigramme de la figure 3 ou les étapes analogues de la figure 4.

Lorsque l'unité de surveillance 22 détecte à l'étape 54 une exécution non-prévue des instructions Inst.1 - Inst.n, suite à l'étape de comparaison 52, l'unité de calcul 26 incrémente la valeur de comptage VC dans la mémoire 60, initialement égale à 0, d'une unité (étape 62). Ensuite, elle vérifie si la valeur de comptage VC ainsi incrémentée a atteint une valeur seuil VC seuil prédéterminée (étape 64). Cette valeur seuil VCseuil correspond au nombre de fois qu'il est admis que l'exécution non-prévue des instructions Inst.1-Inst.n puisse survenir dans le dispositif programmé avant de prendre des mesures définitives pour faire face à une telle défaillance. A titre d'exemple dans le contexte d'une carte à puce, on peut admettre un nombre modéré de telles défaillances (par exemple 3 ou 4) au bénéfice du doute qu'il pourrait s'agir d'une avarie momentanée liée au lecteur (dispositif d'exécution de programme 20), mais qu'au delà de ce nombre, on doit considérer que la carte a été altérée, soit accidentellement, soit par malveillance. Dans ce cas de mise en oeuvre, on peut aussi prévoir d'inscrire la valeur VC dans le dispositif programmé (carte) afin de garder un historique de ces exécutions défaillantes lié physiquement au dispositif programme.

Si la valeur de comptage VC est inférieure au seuil VCseuil, l'unité de surveillance 22 établit la commande d'interruption Int. telle que précédemment décrite avec un simple message d'alerte destiné à l'utilisateur et/ou au système d'exploitation (étape 66) et la transmet au processeur 4 (étape 68).

Si, au contraire, la valeur de comptage VC atteint la valeur seuil VCseuil, l'unité de surveillance 22 établit alors la commande d'interruption Int. telle que précédemment décrite avec un ordre d'interdire toute future utilisation du dispositif programmé contenant les instructions exécutées de manière non-prévue (étape 70) et la transmet au processeur (étape 68). Dans ce cas, il ne sera possible de réutiliser ce dispositif seulement après avoir re-programmé la mémoire 60. Dans le cas où cette mémoire 60 est sous forme de EEPROM ou autre mémoire non-volatile, une telle reprogrammation est très difficile à réaliser de manière détournée.

On notera que la commande Int. d'interruption du programme assortie d'une transmission de message d'alerte ou de commande d'invalidation d'usage futur peut être exécutée soit au niveau du processeur, soit au niveau de l'unité de surveillance 22.

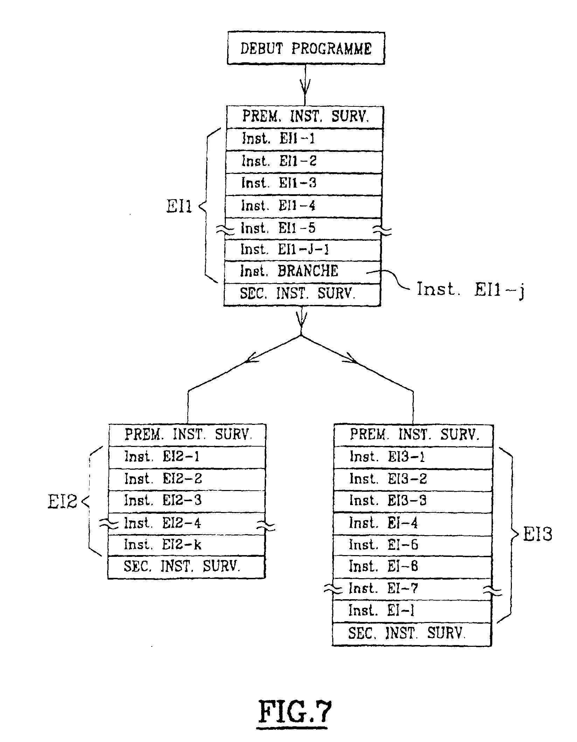

Il sera maintenant décrit par référence à la figure 7 comment l'unité de surveillance 22 conformément à la présente invention peut être mise en oeuvre pour la surveillance d'un programme qui prévoit des sauts ou des branchements.

Dans l'exemple de la figure 7, le dispositif d'exécution de programme 20 comporte dans le registre d'instructions 2 un programme ou une partie de programme destiné au processeur 4, constitué de trois ensembles d'instructions :
- un premier ensemble d'instructions Inst.EI1-1 à Inst.EI1-j (où j est un entier > 1), dont la dernière instruction EI1-j est un code qui commande le branchement conditionnel vers l'un ou l'autre des deux autres ensembles qui suivent;
- un deuxième ensemble d'instructions Inst.EI2-1 à Inst.EI2k (où k est un entier > 1) ; l'exécution de la première instruction Inst.EI2-1 de cet ensemble succède à l'exécution de l'instruction de branchement conditionnel EI1-j si la première de deux conditions posées par celle-ci est satisfaite; et
- un troisième ensemble d'instructions Inst.EI3-1 à Inst.EI31 (où 1 est un entier > 1); l'exécution de la première instruction Inst.EI3-1 de cet ensemble succède à l'exécution de l'instruction de branchement conditionnel EI1-j si la seconde de deux conditions posées par celle-ci est satisfaite.

Les trois ensembles d'instructions EI1, EI2 et EI3 ne comportent pas de sauts à l'intérieur de leur séquence d'instructions. (Dans le cas du premier ensemble d'instructions, le saut conditionnel à l'instruction EI1-j est à la fin de la séquence). Ainsi, pour chacun des trois ensembles d'instructions, toutes les instructions sont prévues pour être exécutées séquentiellement à partir de la première.

Lors de la préparation du programme, on ajoute en tête et en queue de chaque ensemble d'instructions EI1, EI2 et EI3 respectivement la première instruction de surveillance et la seconde instruction de surveillance décrites plus haut par référence aux figures 2 à 6.

La surveillance du programme ou de la partie de programme composé par les ensembles EI1, EI2 et EI3 procède alors comme suit :

L'unité de surveillance 22 se positionne d'abord en phase de début de surveillance (étape 30, figure 3).

Le déroulement débute par l'exécution du premier ensemble d'instructions El1. La première instruction de surveillance placée en en-tête de cet ensemble sera d'abord chargée dans l'unité de surveillance 22. En réponse à cette instruction, l'unité de surveillance initialise son compteur d'instructions et son registre 24 de valeur de hachage VH (étape 34, figure 3) et procède à la routine de hachaye pour chaque instruction Inst.EI1-1 à Inst.El1-j de premier ensemble d'instructions selon les étapes 36 à 46 de la figure 3.

La dernière instruction EI1-j de l'ensemble qui commande le branchement est ainsi également soumise au hachage par l'unité de surveillance 22 avant d'être transmise vers le processeur 4.

L'instruction suivante est la seconde instruction de surveillance (étape 46, figure 3) en queue du premier ensemble d'instructions EI1, qui provoque la phase de comparaison entre la dernière valeur de hachage enregistrée dans le registre 24 avec la valeur de référence Vréf associée à cette seconde instruction.

S'il est détecté à l'étape 50 de comparaison (figure 3) que la dernière valeur de hachage ainsi enregistrée ne correspond pas à la valeur de référence Vréf, l'unité de surveillance 22 procède aux étapes d'interruption du programme 54 et 56 (figures 3 ou 4) ou 54 à 70 (figure 6). De préférence, on prévoit que cette interruption se produit avant même que le programme ait exécuté le branchement conditionnel. Ceci peut être réalisé, par exemple, en associant à l'instruction de saut avec une instruction d'attente de validation venant de l'unité de surveillance, en employant des techniques de programmation connues.

S'il est détecté à l'étape 50 (figure 2) de comparaison que la dernière valeur de hachage ainsi enregistrée correspond effectivement à la valeur de référence Vréf, l'unité de surveillance autorise l'exécution du branchement conditionnel déterminé par la dernière instruction EI1-j de l'ensemble. Le programme se poursuit alors vers l'un ou l'autre des deuxième ou troisième ensembles d'instructions conformément aux conditions de branchement posées par cette dernière instruction.

On suppose dans l'exemple que le saut conditionnel provoque le branchement vers le troisième ensemble d'instructions à exécuter. Dans ce cas, le compteur d'instructions 6 fait passer le pointeur d'instructions 8 directement de la seconde instruction de surveillance en queue du premier ensemble d'instructions EI1 à la première instruction de surveillance en tête du troisième ensemble d'instructions EI3.

L'unité de surveillance exécutera cette nouvelle première instruction en réinitialisant le compteur d'instructions et le registre 24. La procédure de surveillance pour ce troisième ensemble d'instructions se poursuit donc exactement de la même manière que pour le premier ensemble d'instructions. Ainsi, l'unité de surveillance 22 procédera au hachage successif de chacune des instructions lues de cet ensemble, en commençant le hachage avec la même valeur "graine" (qui correspond ici à zéro) que pour le premier ensemble. La seconde instruction de surveillance permet cette fois de déceler un déroulement non-prévu dans l'exécution localisée au niveau de ce troisième ensemble d'instructions et de procéder au même type d'action à l'étape 56.

On comprendra que l'explication donnée pour le cas d'un branchement vers le troisième ensemble s'applique de manière rigoureusement analogue dans le cas d'un branchement vers le deuxième ensemble d'instructions suite à l'exécution de l'instruction de branchement du premier ensemble d'instructions.

Il est possible de permettre à l'unité de surveillance 22 de comptabiliser non seulement le nombre de déroulements non-prévus dans un programme comportant des sauts, mais également les ensembles d'instructions indépendamment surveillés dans lesquels ils se sont produits.

Ainsi, l'unité de surveillance 22 selon le deuxième mode de réalisation (figure 5) peut enregistrer dans sa mémoire 60 l'ensemble d'instructions concerné par chaque interruption constatée. Il est aussi possible d'établir des critères d'invalidation d'usage futur du programme en fonction des ensembles d'instructions dans lesquels se sont les interruptions.

Bien entendu, on comprendra que l'unité de surveillance 22 peut être soit matérialisée séparément du processeur 4 ou intégrée fonctionnellement à ce dernier

Enfin, il est clair que tous les aspects de l'invention décrits en termes de procédé peuvent être aisément compris en termes de moyens matériels de leur mise en oeuvre, et inversement. De même, on comprendra que l'invention décrite couvre également toutes les transpositions évidentes d'un mode de réalisation ou sa variante à un autre.

## Revendications

1. Procédé de surveillance du déroulement de l'exécution d'une suite linéaire d'instructions (Inst.1-Inst.n) d'un programme informatique, consistant à analyser la séquence des instructions transmises vers le processeur (4) destiné à exécuter le programme surveillé et à vérifier le résultat de cette analyse par référence à des données de référence (Vréf) enregistrées avec ledit programme **caractérisé en ce que** les données de référence comprennent une valeur (Vréf) préétablie de manière à correspondre au résultat de l'analyse réalisée lors du procédé de surveillance seulement si toutes les instructions (Inst.1-Inst.n) de la séquence d'instructions ont été effectivement analysées lors du déroulement du programme et **en ce que** ladite analyse de la séquence d'instructions (Inst.1-Inst.n) comprend l'extraction (38) d'une donnée de chaque instruction transmise vers le processeur (4) et un calcul prédéterminé (40, 42) sur chaque donnée ainsi extraite, et **en ce que** la vérification comprend une comparaison (50) du résultat de l'analyse avec les données de référence (Vréf).

2. Procédé selon la revendication 1, **caractérisé en ce que** ladite vérification du résultat de l'analyse est provoquée par une instruction (Inst.n+1) placée à un emplacement prédéterminé dans le programme à surveiller, cette instruction contenant les données de référence (Vréf) relatives à un ensemble d'instructions (Inst.1-Inst.n) dont l'exécution correcte est à surveiller.

3. Procédé selon l'une quelconque des revendications 1 à 2, **caractérisé en ce que**, lorsque les instructions (Inst.1-Inst.n) de l'ensemble d'instructions à surveiller se présentent sous la forme d'une valeur, par exemple des codes enregistrés sous forme hexadécimal ou décimal, on effectue ladite analyse des instructions en considérant celles-ci en tant que valeur numérique.

4. Procédé selon la revendication 1, comprenant les étapes consistant à :
- lors de la préparation du programme à surveiller :
- incorporer, à au moins un emplacement prédéterminé d'une séquence d'instructions (Inst.1-Inst.n) du programme, une valeur de référence (Vréf) établie selon une règle prédéterminée appliquée sur des données identifiables dans chaque instruction à surveiller, et
- lors de l'exécution du programme à surveiller:
- obtenir (38) lesdites données identifiables dans chaque instruction reçue en vu de son exécution,
- appliquer (40, 42) ladite règle prédéterminée sur lesdites données identifiables ainsi obtenues pour établir une valeur de vérification (VHn), et
- vérifier (50) que cette valeur de vérification correspond effectivement à la valeur de référence enregistrée avec le programme.

5. Procédé selon l'une quelconque des revendications 1 à 4, **caractérisé en ce qu'**il comprend en outre une étape (56) d'interruption du déroulement du programme surveillé si l'analyse révèle le programme surveillé ne s'est pas déroulé de manière prévue.

6. Procédé selon l'une quelconque des revendications 1 à 5, **caractérisé en ce qu'**il comprend en outre une étape (70) d'invalidation pour usage futur du dispositif comprenant le programme surveillé si ladite analyse révèle un nombre prédéterminé de fois que le programme surveillé ne s'est pas déroulé de manière prévue.

7. Procédé selon l'une quelconque des revendications 1 à 6, caractérisé en ce l'ensemble d'instructions à surveiller ne comporte pas de sauts dans son déroulement prévu.

8. Procédé selon l'une quelconque des revendications 1 à 6, **caractérisé en ce que**, lorsque le programme (EI1, EI2, EI3) ou la portion de programme à surveiller prévoit au moins un saut, on applique le procédé de surveillance séparément sur des ensembles d'instructions de ce programme qui ne comportent pas de sauts entre deux instructions successives.

9. Procédé selon la revendication 8, **caractérisé en ce que** lorsque le programme à surveiller comporte une instruction (EI1-j) dormant lieu à un saut dépendant des données manipulées, on met en oeuvre le procédé de surveillance séparément pour un ensemble d'instructions (EI1) qui précède le saut, et pour au moins un ensemble d'instructions (EI2, EI3) qui succède à ce saut.

10. Procédé selon la revendication 9, **caractérisé en ce que**, pour un ensemble d'instructions (EI1) prévoyant un saut, on intègre à cet ensemble l'instruction (EI1-j) qui commande ce saut aux fins de l'analyse visant à obtenir la valeur de vérification (VH) de cet ensemble d'instructions, et on vérifie ainsi le bon déroulement de cet ensemble d'instructions avant d'exécuter l'instruction de saut.

11. Procédé selon l'une quelconque des revendications I à 10, **caractérisé en ce que** l'on ré-initialise l'analyse avant chaque nouvelle surveillance d'une séquence ou d'un ensemble (EI1, EI2, EI3) d'instructions à surveiller.

12. Procédé selon la revendication 11, **caractérisé en ce que** la réinitialisation de l'analyse à chaque nouvelle surveillance consiste à effacer ou remplacer une valeur de vérification (VH) obtenue lors d'une précédente analyse.

13. Procédé selon la revendication 11 ou 12, **caractérisé en ce que** la réinitialisation de l'analyse de surveillance est commandée par le logiciel protégé lui-même.

14. Procédé selon l'une quelconque des revendications 1 à 13, **caractérisé en ce que** l'analyse produit une valeur de vérification (VH) obtenue en tant que dernière valeur d'une suite de valeurs que l'on fait évoluer successivement avec l'analyse de chacune des instructions (Inst.1-Inst.n) analysées de l'ensemble d'instructions, permettant ainsi de contenir un état interne du déroulement du procédé de surveillance et de suivre son évolution.

15. Procédé selon l'une quelconque des revendications 1 à 14, **caractérisé en ce que** l'analyse consiste à calculer (40, 42), pour chaque instruction considérée (Inst.n) succédant à une instruction précédente (Inst.n-1), le résultat d'une opération sur à la fois une valeur (VHn) obtenue de l'instruction considérée et le résultat (VHn-1) obtenu par la même opération effectuée sur l'instruction précédente.

16. Procédé selon l'une quelconque des revendications 1 à 15, **caractérisé en ce que** l'analyse consiste à appliquer de manière récursive une fonction de hachage f(VFVHn-1, Vinst.n) sur des valeurs obtenues de chaque instruction surveillée, en partant d'une dernière initialisation effectuée.

17. Procédé selon l'une quelconque des revendications 1 à 15, **caractérisé en ce que** l'analyse consiste à faire évoluer une valeur de vérification en effectuant un calcul de redondance non nécessairement cryptographique sur l'ensemble des codes d'opération et des adresses exécutées depuis la dernière initialisation effectuée.

18. Procédé selon l'une quelconque des revendications 1 à 17, **caractérisé en ce que** l'analyse consiste à obtenir une valeur de comparaison (VCn) par calcul de valeurs intermédiaires successives au fur et à mesure que l'on obtient les données des instructions respectives servant pour ce calcul durant l'exécution de ces instructions.

19. Procédé selon l'une quelconque des revendications 1 à 17, **caractérisé en ce que** l'analyse comprend une étape de sauvegarde de chaque donnée nécessaire pour la vérification, obtenue à partir des instructions de l'ensemble d'instructions à surveiller (Inst.1-Inst.n) au fur et à mesure qu'elles sont exécutées, et de n'effectuer un calcul de la valeur de vérification (VHn) à partir de ces données seulement au moment nécessaire, une fois que toutes les données nécessaires ont été obtenues.

20. Dispositif de surveillance du déroulement de l'exécution d'une suite d'instructions (Inst.1-Inst.n) d'un programme informatique mettant en oeuvre le procédé de surveillance selon l'une quelconque des revendications 1 à 19, **caractérisé en ce qu'**il comprend des moyens (22-26) pour analyser la séquence des instructions transmises vers le processeur (4) destiné à exécuter le programme surveillé et des moyens (26) pour vérifier le résultat (VCn) de cette analyse par référence à des données de référence (Vréf) enregistrées avec ledit programme.

21. Dispositif selon la revendication 20, adapté pour mettre en oeuvre le procédé de surveillance selon l'une quelconque des revendications 1 à 19, **caractérisé en ce qu'**il comporte un registre (24) permettant d'enregistrer des résultats intermédiaires (VH) dans un calcul en chaîne effectué par le moyen d'analyse (26) pour obtenir une valeur de vérification (VHn).

22. Dispositif selon la revendication 21, **caractérisé en ce qu'**il comprend des moyens pour permettre l'enregistrement d'une valeur prédéterminée ou une remise à zéro du registre (24) sous la commande d'une instruction (Inst.n+1) transmise lors de l'exécution d'un programme à surveiller, par exemple à l'occasion d'un saut dans le programme.

23. Dispositif selon l'une quelconque des revendications 20 à 22, **caractérisé en ce qu'**il comporte un moyen (60) de comptabilisation du nombre de déroulements non-prévus du programme surveillé, tel que déterminé par le moyen d'analyse (26), et des moyens pour invalider l'utilisation future du programme à surveiller si ce nombre atteint un seuil (VCseuil) prédéterminé.

24. Dispositif selon l'une quelconque des revendications 20 à 23, **caractérisé en ce qu'**il est intégré à un dispositif programmé, telle qu'une carte à puce, contenant ledit programme à surveiller.

25. Dispositif selon l'une quelconque des revendications 20 à 23, **caractérisé en ce qu'**il est intégré un dispositif d'exécution de programme (20).

26. Dispositif d'exécution de programme (20), destiné à exécuter une suite d'instructions (Inst.1-Inst.n) d'un programme informatique, **caractérisé en ce qu'**il comporte des moyens (22-26) pour analyser la séquence des instructions transmises pour exécution et des moyens pour vérifier le résultat de cette analyse par réference à des données de référence (Vréf) enregistrées avec le programme à surveiller, selon l'une quelconque des revendications 20 à 23.

27. Dispositif d'exécution de programme (20) selon la revendication 26, adapté pour mettre en oeuvre le procédé selon l'une quelconque des revendications 1 à 21.

28. Dispositif programmé comportant une suite d'instructions enregistrées (Inst.1-Inst.n), **caractérisé en ce qu'**il comporte en outre une mémoire fixe contenant des données de référence (Vréf) préétablies en fonction de données contenues dans lesdites instructions et destinées à permettre une vérification de la séquence des instructions analysées selon l'une quelconque des revendications 1 à 21, ledit dispositif étant destiné à coopérer avec un dispositif de surveillance selon l'une quelconque des revendications 20 à 27.

29. Dispositif selon la revendication 28, **caractérisé en ce qu'**il se présente sous forme de carte à puce.

30. Dispositif selon la revendication 30 ou 31, **caractérisé en ce que** les données de référence (Vréf) sont enregistrées sous la forme de valeur(s) pré-câblée(s) fixée(s) en mémoire.

31. Dispositif de programmation d'un dispositif destiné à être programmé selon l'une quelconque des revendications 28 à 30, **caractérisé en ce qu'**il comprend des moyens pour inscrire à au moins un emplacement prédéterminé d'une séquence d'instructions du programme (Inst.1-Inst.n) une valeur de référence (Vréf) calculée selon un mode préétabli à partir de données comprises dans chaque instruction d'un ensemble d'instructions dont on souhaite surveiller l'exécution.

32. Machine virtuelle ou interpréteur interprétant un code critique, **caractérisé en ce qu'**il met en oeuvre le procédé selon l'une quelconque des revendications 1 à 19 pour l'exécution de ce code critique.

## Claims

1. A method of monitoring the implementation of the execution of a linear series of instructions (Inst.1-Inst.n) of a computer program, consisting of analysing the sequence of instructions transmitted to the processor (4) intended to execute the program being monitored and to verify the result of this analysis by reference to reference data (Vref) recorded with the said program, **characterised in that** the reference data comprise a value (Vref) pre-established so as to correspond to the result of the analysis made during the monitoring process only if all the instructions (Inst.1-Inst.n) in the sequence of instructions have actually been analysed during the running of the program and **in that** the said analysis of the sequence of instructions (Inst.1-Inst.n) comprises the extraction (38) of a data item from each instruction transmitted to the processor (4) and a predetermined calculation (40, 42) on each data item thus extracted, and **in that** the verification comprises a comparison (50) of the result of the analysis with the reference data (Vref).

2. A method according to Claim 1, **characterised in that** the said verification of the result of the analysis is brought about by an instruction (Inst.n+1) placed at a predetermined location in the program to be monitored, this instruction containing the reference data (Vref) relating to a set of instructions (Inst.1-Inst.n) whose correct execution is to be monitored.

3. A method according to any one of Claims 1 to 2, **characterised in that**, when the instructions (Inst.1-Inst.n) of the set of instructions to be monitored are in the form of a value, for example codes registered in hexadecimal or decimal form, in carrying out the said analysis of the instructions these are considered as a numerical value.

4. A method according to Claim 1, comprising the steps consisting of:
- during the preparation of the program to be monitored:
- incorporating, at at least one predetermined location in a sequence of instructions (Inst.1-Inst.n) of the program, a reference value (Vref) established according to a predetermined rule applied to identifiable data in each instruction to be monitored, and
- during the execution of the program to be monitored:
- obtaining (38) the said identifiable data in each instruction received with a view to its execution,
- applying (40, 42) the said predetermined rule to the said identifiable data thus obtained in order to establish a verification value (VHn), and
- verifying (50) that this verification value does actually correspond to the reference value recorded with the program.

5. A method according to any one of Claims 1 to 4, **characterised in that** it also comprises a step (56) of interrupting the running of the program being monitored if the analysis reveals that the program being monitored has not run as expected.

6. A method according to any one of Claims 1 to 5, **characterised in that** it also comprises an invalidation step (70) for future usage of the device comprising the program being monitored if the said analysis reveals a predetermined number of times that the program being monitored has not run as expected.

7. A method according to any one of Claims 1 to 6, **characterised in that** the set of instructions to be monitored does not include jumps in its expected running.

8. A method according to any one of Claims 1 to 6, **characterised in that**, when the program (EI1, EI2, EI3) or the portion of a program to be monitored provides for at least one jump, the monitoring method is applied separately to sets of instructions of this program which do not include jumps between two successive instructions.

9. A method according to Claim 8, **characterised in that**, when the program to be monitored includes an instruction (EI1-j) giving rise to a jump depending on the data being manipulated, the monitoring method is implemented for a set of instructions (EI1) which precedes the jump, and for at least one set of instructions (EI2, EI3) which follows this jump.

10. A method according to Claim 9, **characterised in that**, for a set of instructions (EI1) providing for a jump, there is integrated into this set the instruction (EI1-j) which controls this jump for the purpose of the analysis aimed at obtaining the verification value (VH) of this set of instructions, and in this way the correct implementation of this set of instructions is verified before executing the jump instruction.

11. A method according to any one of Claims 1 to 10, **characterised in that** the analysis is reinitialised before each new monitoring of a sequence or of a set (EI1, EI2, EI3) of instructions to be monitored.

12. A method according to Claim 11, **characterised in that** the reinitialisation of the analysis of each new monitoring consists of erasing or replacing a verification value (VH) obtained during a previous analysis.

13. A method according to Claim 11 or 12, **characterised in that** the reinitalisation of the monitoring analysis is controlled by the protected software itself.

14. A method according to any one of Claims 1 to 13, **characterised in that** the analysis produces a verification value (VH) obtained as a last value of a series of values which is made to change successively with the analysis of each of the instructions (Inst.1-Inst.n) analysed in the set of instructions, thus making it possible to contain an internal state of the implementation of the monitoring method and to follow its changes.

15. A method according to any one of Claims 1 to 14, **characterised in that** the analysis consists of calculating (40, 42), for each instruction considered (Inst.n) following on from a previous instruction (Inst.n-1), the result of an operation on both a value (VHn) obtained of the instruction in question and the result (VHn-1) obtained by the same operation performed on the previous instruction.

16. A method according to any one of Claims 1 to 15, **characterised in that** the analysis consists of recursively applying a hash function f(VHn-1, Vinst.n) to values obtained of each instruction monitored, starting from a last initialisation carried out.

17. A method according to any one of Claims 1 to 15, **characterised in that** the analysis consists of changing a verification value by effecting a redundancy calculation, not necessarily cryptographic, on all the operation codes and the addresses executed since the last initialisation carried out.

18. A method according to any one of Claims 1 to 17, **characterised in that** the analysis consists of obtaining a comparison value (VCn) by calculating successive intermediate values along with the obtaining of the data of the respective instructions serving for this calculation during the execution of these instructions.

19. A method according to any one of Claims 1 to 17, **characterised in that** the analysis comprises a step of saving each data item necessary for the verification, obtained from instructions of the set of instructions to be monitored (Inst.1-Inst.n) as they are executed, and making a calculation of the verification value (VHn) from these data only at the necessary time, once all the necessary data have been obtained.

20. A device for monitoring the implementation of the execution of a series of instructions (Inst.1-Inst.n) of a computer program implementing the monitoring method according to any one of Claims 1 to 19, **characterised in that** it comprises means (22-26) for analysing the sequence of instructions transmitted to the processor (4) intended to execute the program being monitored and means (26) for verifying the result (VCn) of this analysis by reference to reference data (Vref) recorded with the said program.

21. A device according to Claim 20, adapted to implement the monitoring method according to any one of Claims 1 to 19, **characterised in that** it contains a register (24) for recording its immediate results (VH) in a calculation in a chain carried out by the analysis means (26) in order to obtain a verification value (VHn).

22. A device according to Claim 21, **characterised in that** it comprises means for allowing the recording of a predetermined value or a resetting of the register (24) under the control of an instruction (Inst.n+1) transmitted during the execution of a program to be monitored, for example on the occasion of a jump in the program.

23. A device according to any one of Claims 20 to 22, **characterised in that** it has a means (60) of counting up the number of unexpected events in the program monitored, as determined by the analysis means (26), and means for invalidating the future use of the program to be monitored if this number attains a predetermined threshold (VCthreshold).

24. A device according to any one of Claims 20 to 23, **characterised in that** it is integrated in a program device, such as a chip card, containing the said program to be monitored.

25. A device according to any one of Claims 20 to 23, **characterised in that** it is integrated in a program execution device (20).

26. A program execution device (20), intended to execute a series of instructions (Inst.1-Inst.n) of a computer program, **characterised in that** it has means (22-26) for analysing the sequence of instructions transmitted for execution and means for verifying the result of this analysis by reference to reference data (Vref) recorded with the program to be monitored, according to any one of Claims 20 to 23.

27. A program execution device (20) according to Claim 26, adapted for implementing the method according to any one of Claims 1 to 21.

28. A program device containing a series of recorded instructions (Inst.1-Inst.n), **characterised in that** it also has a fixed memory containing reference data (Vref) pre-established according to data contained in the said instructions and intended to allow a verification of the sequence of instructions analysed according to any one of Claims 1 to 21, the said device being intended to cooperate with a monitoring device according to any one of Claims 20 to 27.

29. A device according to Claim 28, **characterised in that** it is in the form of a chip card.

30. A device according to Claim 30 or 31, **characterised in that** the reference data (Vref) are recorded in the form of a prewired value or values fixed in memory.

31. A device for programming a device intended to be programmed according to any one of Claims 28 to 30, **characterised in that** it comprises means for entering, at at least one predetermined location in a sequence of instructions of the program (Inst.1-Inst.n), a reference value (Vref) calculated according to a mode pre-established from data included in each instruction of a set of instructions whose execution it is wished to monitor.

32. A virtual machine or interpreter interpreting a critical code, **characterised in that** it implements the method according to any one of Claims 1 to 9 for executing this critical code.

## Patentansprüche

1. Überwachsungsverfahren des Ablaufs der Ausführung einer linearen Folge von Instruktionen (Inst.1-Inst.n) eines informationstechnischen Programms, das darin besteht, die Sequenz der an den Prozessor (4), der das überwachte Programm ausführen soll, übertragenen Instruktionen zu analysieren und das Ergebnis dieser Analyse mit Referenzdaten (Vref) zu vergleichen, die mit dem besagten Programm gespeichert wurden, **dadurch gekennzeichnet, dass** die Referenzdaten einen vorherbestimmten Wert (Vref) enthalten, so dass er dem Ergebnis der während des Überwachungsverfahrens durchgeführten Analyse nur dann entspricht, wenn alle Instruktionen (Inst.1-Inst.n) der Instruktionssequenz effektiv beim Ablauf des Programms analysiert wurden, und dass die besagte Analyse der Instruktionssequenz (Inst.1-Inst.n) die Extraktion (38) eines Werts jeder an den Prozessor (4) übertragenen Instruktion und eine vorherbestimmte Berechnung (40, 42) an jedem extrahierten Wert umfasst, und die Prüfung einen Vergleich (50) des Ergebnisses der Analyse mit den Referenzdaten (Vref) umfasst.

2. Verfahren nach Anspruch 1, **dadurch gekennzeichnet, dass** die besagte Prüfung des Ergebnisses der Analyse durch eine an einer vorherbestimmten Stelle des zu überwachenden Programms vorgesehenen Instruktion (Inst.n+1) verursacht wird, wobei diese Instruktion die Referenzdaten (Vref) bezüglich einer Instruktionseinheit (Inst.1-Inst.n) enthält, deren korrekte Ausführung zu überwachen ist.

3. Verfahren nach einem der Ansprüche 1 bis 2, **dadurch gekennzeichnet, dass** wenn die Instruktionen der zu überwachenden Instruktionsgruppe in Form eines Werts vorliegen, beispielsweise in hexadezimaler oder dezimaler Form gespeicherte Codes, erfolgt die besagte Analyse der Instruktionen, indem man sie als numerischen Wert betrachtet.

4. Verfahren nach Anspruch 1, das die folgenden Etappen umfasst:
- bei der Vorbereitung des zu überwachenden Programms:
- Einfügung, an mindestens einer vorherbestimmten Stelle einer Instruktionssequenz (Inst.1-Inst.n) des Programms, eines Referenzwerts (Vref), der gemäß einer gegebenen, für identifizierbare Daten in jeder zu überwachenden Instruktion geltenden Regel berechnet wird, und
- bei der Ausführung des zu überwachenden Programms:
- Erhalt (38) der besagten identifizierbaren Daten in jeder für ihre Ausführung empfangenen Instruktion,
- Anwendung (40, 42) der besagten vorherbestimmten Regel auf die besagten identifizierbaren, so erhaltenen Daten, um einen Prüfwert (VHn) zu berechnen, und
- Prüfung (50), ob dieser Prüfwert effektiv mit dem mit dem Programm gespeicherten Referenzwert übereinstimmt.

5. Verfahren nach einem der Ansprüche 1 bis 4, **dadurch gekennzeichnet, dass** es eine Unterbrechungsetappe (56) des Ablaufs des überwachten Programms umfasst, wenn die Analyse ergibt, dass das überwachte Programm nicht wie vorgesehen abgelaufen ist.

6. Verfahren nach einem der Ansprüche 1 bis 5, **dadurch gekennzeichnet, dass** es ferner eine Etappe (70) der Ungültigmachung für den zukünftigen Gebrauch der das überwachte Programm enthaltenden Vorrichtung umfasst, wenn die besagte Analyse ergibt, dass das überwachte Programm eine vorherbestimmte Anzahl von Malen nicht wie vorgesehen abgelaufen ist.

7. Verfahren nach einem der Ansprüche 1 bis 6, **dadurch gekennzeichnet, dass** die zu überwachende Instruktionseinheit keine Sprünge in ihrem vorgesehenen Ablauf aufweist.

8. Verfahren nach einem der Ansprüche 1 bis 6, **dadurch gekennzeichnet, dass** man, wenn das zu überwachende Programm (EI1, EI2, EI3) oder Programmabschnitt mindestens einen Sprung vorsieht, das Überwachungsverfahren getrennt für Instruktionseinheiten dieses Programms anwendet, die keine Sprünge zwischen zwei aufeinander folgenden Instruktionen enthalten.

9. Verfahren nach Anspruch 8, **dadurch gekennzeichnet, dass** man, wenn das zu überwachende Programm eine Instruktion (EI1-j) umfasst, die zu einem von den manipulierten Daten abhängigen Sprung führt, das Überwachungsverfahren getrennt für eine Instruktionseinheit (EI1) implementiert, die vor dem Sprung liegt, und für mindestens eine Instruktionseinheit (EI2, EI3), die auf diesen Sprung folgt.

10. Verfahren nach Anspruch 9, **dadurch gekennzeichnet, dass** man bei einer Instruktionseinheit (EI1) mit einem Sprung in diese Einheit die Instruktion (EI1-j) integriert, die diesen Sprung zum Zweck der Analyse steuert, um den Prüfwert (VH) dieser Instruktionseinheit zu erhalten, und man so den korrekten Ablauf dieser Instruktionseinheit prüft, bevor die Sprunginstruktion ausgeführt wird.

11. Verfahren nach einem der Ansprüche 1 bis 10, **dadurch gekennzeichnet, dass** man die Analyse vor jeder neuen Überwachung einer Sequenz oder einer zu überwachenden Instruktionseinheit (EI1, EI2, EI3) neu initialisiert.

12. Verfahren nach Anspruch 11, **dadurch gekennzeichnet, dass** die Neuinitialisierung der Analyse bei jeder neuen Überwachung darin besteht, einen bei einer vorherigen Analyse erhaltenen Prüfwert (VH) zu löschen oder zu ersetzen.

13. Verfahren nach Anspruch 11 oder 12, **dadurch gekennzeichnet, dass** die Neuinitialisierung der Überwachungsanalyse von der geschützten Software selbst gesteuert wird.

14. Verfahren nach einem der Ansprüche 1 bis 13, **dadurch gekennzeichnet, dass** die Analyse einen Prüfwert (VH) erzeugt, der als letzter Wert einer Reihe von Werten erhalten wird, die man nacheinander mit der Analyse jeder der betrachteten analysierten Instruktionen (Inst.1-Inst.n) der Instruktionseinheit durchlaufen lässt, wobei ein interner Ablaufzustand des Überwachungsverfahrens umfasst und seine Weiterentwicklung verfolgt werden kann.

15. Verfahren nach einem der Ansprüche 1 bis 14, **dadurch gekennzeichnet, dass** die Analyse darin besteht, für jede betrachtete, auf eine vorherige Instruktion (Inst.n-1) folgende Instruktion (Inst.n) das Ergebnis einer Operation bezüglich gleichzeitig eines aus der betrachteten Instruktion extrahierten Werts (VHn) und das Ergebnis (VHn-1), das durch die gleiche, an dieser vorherigen Instruktion durchgeführte Operation erhalten wurde, zu berechnen (40, 42).

16. Verfahren nach einem der Ansprüche 1 bis 15, **dadurch gekennzeichnet, dass** die Analyse darin besteht, auf die von jeder überwachten Instruktion erhaltenen Werte ab einer zuletzt durchgeführten Initialisierung eine Hackfunktion (f(VHn-1, Vinst.n) anzuwenden.

17. Verfahren nach einem der Ansprüche 1 bis 15, **dadurch gekennzeichnet, dass** die Analyse darin besteht, einen Prüfwert weiterzuentwickeln, indem man eine nicht zwangsläufig kryptographische Redundanzberechnung für alle Operationscodes und seit der zuletzt durchgeführten Initialisierung ausgeführten Adressen durchführt.

18. Verfahren nach einem der Ansprüche 1 bis 17, **dadurch gekennzeichnet, dass** die Analyse darin besteht, durch die Berechnung von aufeinander folgenden Zwischenwerten je nach Erhalt der Daten der jeweiligen Instruktionen, die für diese Berechnung während der Ausführung dieser Instruktionen dienen, einen Vergleichswert (VCn) zu erhalten.

19. Verfahren nach einem der Ansprüche 1 bis 17, **dadurch gekennzeichnet, dass** die Analyse eine Speicheretappe jeder für die Prüfung erforderlichen Information umfasst, die ab Instruktionen der zu überwachenden Instruktionseinheit (Inst.1-Inst.n) je nach ihrer Ausführung erhalten wird, und dass eine Berechnung des Prüfwerts (VHn) ab diesen Daten nur zum erforderlichen Zeitpunkt durchgeführt wird, nachdem alle diese erforderlichen Daten erhalten wurden.

20. Überwachungsvorrichtung des Ablaufs der Ausführung einer Folge von Instruktionen (Inst.1-Inst.n) eines informationstechnischen Programms, die das Überwachungsverfahren nach einem der Ansprüche 1 bis 19 implementiert, **dadurch gekennzeichnet, dass** sie Mittel (22-26) umfasst, um die Sequenz der an den Prozessor (4), der das überwachte Programm ausführen soll, übertragenen Instruktionen zu analysieren, und Mittel (26), um das Ergebnis (VCn) dieser Analyse anhand von mit dem besagten Programm gespeicherten Referenzdaten (Vref) zu prüfen.

21. Überwachungsvorrichtung nach Anspruch 20 zur Implementierung des Überwachungsverfahrens nach einem der Ansprüche 1 bis 19, **dadurch gekennzeichnet, dass** sie einen Ordner (24) umfasst, in dem die Zwischenergebnisse (VH) in einer vom Analysemittel (26) für den Erhalt eines Prüfwerts (VHn) durchgeführten Kettenberechnung gespeichert werden können.

22. Vorrichtung nach Anspruch 21, **dadurch gekennzeichnet, dass** sie Mittel umfasst, um das Speichern eines vorherbestimmten Werts oder eine Nullrückstellung des Ordners (24) auf Befehl einer Instruktion (Inst.n+1) zu ermöglichen, die bei der Ausführung eines zu überwachenden Programms, beispielsweise anlässlich eines Sprungs im Programm, übertragen wurde.

23. Vorrichtung nach einem der Ansprüche 20 bis 22, **dadurch gekennzeichnet, dass** sie ein Zählmittel (60) der Anzahl der nicht vorgesehenen Abläufe des überwachten Programms wie vom Analysemittel (26) vorgegeben umfasst, sowie Mittel, um die zukünftige Benutzung des zu überwachenden Programms ungültig zu machen, wenn diese Anzahl einen vorherbestimmten Grenzwert (VCseuil) überschreitet.

24. Vorrichtung nach einem der Ansprüche 20 bis 23, **dadurch gekennzeichnet, dass** sie in eine programmierte Vorrichtung wie eine Chipkarte integriert ist, die das besagte zu überwachende Programm enthält.

25. Vorrichtung nach einem der Ansprüche 20 bis 23, **dadurch gekennzeichnet, dass** sie in eine Programmausführungsvorrichtung (20) integriert ist.

26. Programmausführungsvorrichtung (20) zur Ausführung einer Reihe von Instruktionen (Inst.1-Inst.n) eines informationstechnischen Programms, **dadurch gekennzeichnet, dass** sie Mittel (22-26) umfasst, um die Sequenz der zur Ausführung übertragenen Instruktionen zu analysieren, und Mittel, um zu prüfen, ob das Ergebnis dieser Analyse mit den mit dem zu überwachenden Programm gespeicherten Referenzdaten (Vref) übereinstimmt, nach einem der Ansprüche 20 bis 23.

27. Programmausführungsvorrichtung (20) nach Anspruch 26 für die Implementierung des Verfahrens nach einem der Ansprüche 1 bis 21.

28. Programmierte Vorrichtung, die eine Reihe von gespeicherten Instruktionen (Inst.1-Inst.n) umfasst, **dadurch gekennzeichnet, dass** sie im Übrigen einen Festspeicher umfasst, der Referenzdaten (Vref) enthält, die entsprechend in den besagten Instruktionen enthaltenen Daten vorherbestimmt wurden, und die eine Prüfung der Sequenz der nach einem der Ansprüche 1 bis 21 analysierten Instruktionen ermöglichen sollen, wobei die besagte Vorrichtung dazu bestimmt ist, mit der Überwachungsvorrichtung nach einem der Ansprüche 20 bis 27 zusammenzuwirken.

29. Vorrichtung nach Anspruch 28, **dadurch gekennzeichnet, dass** sie die Form einer Chipkarte aufweist.

30. Vorrichtung nach Anspruch 30 oder 31, **dadurch gekennzeichnet, dass** die Referenzdaten (Vref) in Form eines im Speicher festgelegten vorverkabelten Werts (vorverkabelten Werten) gespeichert werden.

31. Programmiervorrichtung einer Vorrichtung, die nach einem der Ansprüche 28 bis 30 programmiert werden soll, **dadurch gekennzeichnet, dass** sie Mittel umfasst, um zumindest an einer vorherbestimmten Stelle einer Instruktionssequenz (Inst.1-Inst.n) des Programms einen Referenzwert (Vref) einzutragen, der nach einem vorgegebenen Modus ab in jeder Instruktion einer Instruktionseinheit, deren Ausführung überwacht werden soll, enthaltenen Daten berechnet wird.

32. Virtuelle Maschine oder Interpreter, die einen kritischen Code interpretiert, **dadurch gekennzeichnet, dass** sie das Verfahren nach einem der Ansprüche 1 bis 19 implementiert, um diesen kritischen Code auszuführen.
